# EUROPEAN PATENT APPLICATION

(11) **EP 2 717 134 A2**
(43) Date of publication of application: **09.04.2014**
(21) Application number: 13187731.8
(22) Date of filing: 08.10.2013
(51) Int. Cl.: G06F 3/041

(54) **Method and apparatus for enhancing performance of touch screen**

(30) Priority: 08.10.2012 KR 20120111167
(71) Applicant: Samsung Electronics Co., Ltd, Gyeonggi-do 443-742 (KR)
(72) Inventor: Park, Jaehyung, 443-742 Gyeonggi-do (KR); Heo, Hoondo, 443-742 Gyeonggi-do (KR)
(74) Representative: Gover, Richard Paul

(57) **Abstract**

A method and an apparatus for enhancing a performance of a touch screen are provided. The method of enhancing a performance of a touch panel which is placed close to a display panel includes determining, while the touch panel is activated, whether the touch panel is affected by noise, and changing a frame rate of the display panel based on the determination.

## Description

### TECHNICAL FIELD

The present disclosure relates to a method and apparatus for enhancing a performance of a touch screen. More particularly, the present disclosure relates to a method and apparatus for enhancing a performance of an touch panel which is placed close to a display panel.

### BACKGROUND

Nowadays, due to rising trends of convenient input and decreased thickness, there has been an increase in the number of mobile terminals that use a touch screen. The touch screen may provide input and output functions and includes a display panel and a touch panel. That is, the touch screen provides an output function through the display panel and provides an input function through the touch panel. The touch panel of the touch screen samples a sensor signal input through a touch sensor at a certain sampling period and analyzes the sampled sensor signal, thereby recognizing a touch input. In general, when outside noise exists, in order to recognize an accurate touch the touch panel should increase the sampling frequency.

In an in-cell touch screen in which the display panel and the touch panel are integrally formed, when the display panel and the touch panel are driven together, noise that has occurred upon driving the display panel is introduced into the touch panel and thus the touch panel may erroneously operate. In order to prevent this, the in-cell touch screen enables the touch panel to drive when the display panel does not drive. In this way, the in-cell touch screen has a restriction in a time that drives the touch panel.

Due to the time restriction, the in-cell touch screen has a problem that cannot increase the sampling frequency in a situation in which outside noise exists. That is, when outside noise is introduced, the touch performance of the in-cell touch screen deteriorates.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for enhancing a performance of a touch screen that can improve a touch performance of a touch panel by adjusting a frame rate of a display panel of a touch screen according to whether noise is introduced.

Another aspect of the present disclosure is to provide a method and apparatus for enhancing a performance of a touch screen that can reduce a frame rate of a display panel according to a noise level.

In accordance with an aspect of the present disclosure, a method of enhancing a performance of a touch panel which is placed close to a display panel is provided. The method includes: determining, while the touch panel is activated whether the touch panel is affected by noise; and changing a frame rate of the display panel based on the determination.

In accordance with another aspect of the present disclosure, a apparatus of enhancing a performance of a touch panel is provided. The apparatus includes a display panel; the touch panel is placed close to the display panel; and a controller configured to determine whether the touch panel is affected by noise while the touch panel is activated, and to change a frame rate of the display panel based on the determination.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description in conjunction with the accompanying drawings, in which:

FIG. 1 is a block diagram illustrating a configuration of a mobile terminal according to an embodiment of the present disclosure;

FIGS. 2A, 2B, 2C, and 2D are cross-sectional views illustrating a structure of a touch screen according to an embodiment of the present disclosure;

FIG. 3 is a flowchart illustrating a method of enhancing a touch performance of a touch screen according to an embodiment of the present disclosure;

FIGS. 4 and 5 are diagrams illustrating operation of a touch screen according to a frame rate change according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A mobile terminal according to the present disclosure is a terminal including a touch screen in which a display panel and a touch panel are integrally formed and may be a mobile communication terminal, a Personal Digital Assistant (PDA), a smart phone, a tablet Personnel Computer (PC), a Portable Multimedia Player (PMP), a navigation terminal, a laptop PC, and the like.

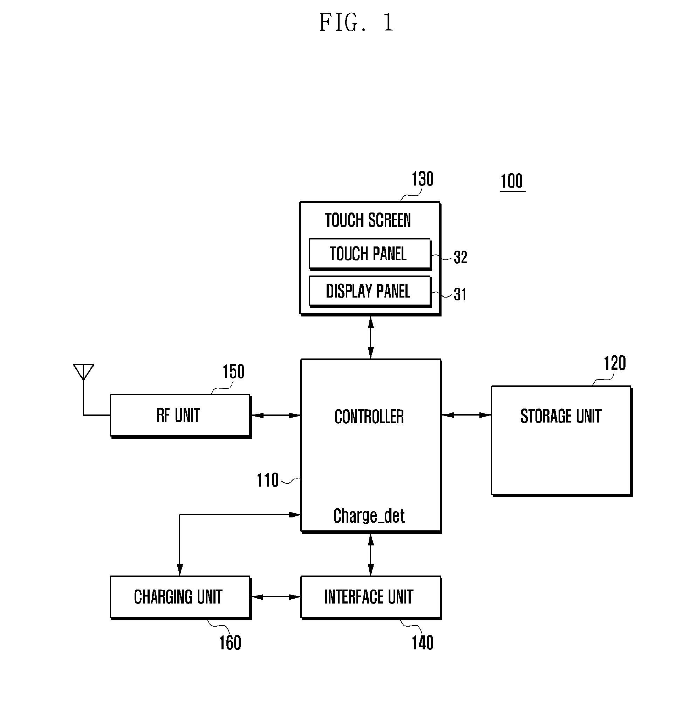

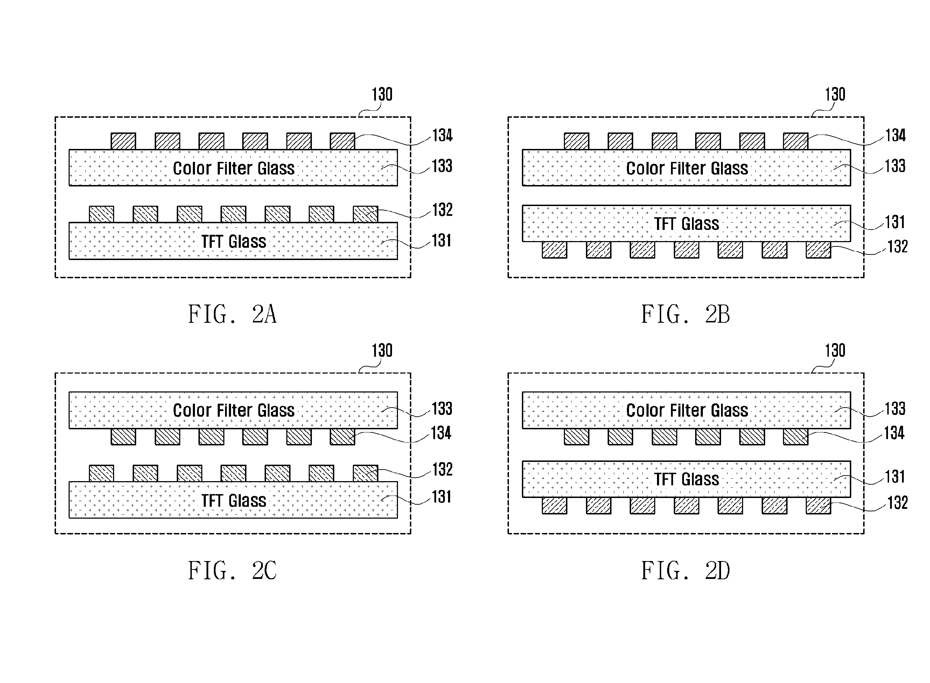

FIG. 1 is a block diagram illustrating a configuration of a mobile terminal according to an embodiment of the present disclosure, and FIGS. 2A-2D are cross-sectional views illustrating structures of a touch screen according to embodiments of the present disclosure.

Referring to FIGS. 1 and 2A to 2D, a mobile terminal 100 may include a controller 110, storage unit 120, touch screen 130, interface unit 140, Radio Frequency (RF) unit 150, and charging unit 160.

The touch screen 130 may provide an output function and an input function. For this, the touch screen 130 may include a display panel 31 and a touch panel 32. The touch panel 32 is placed close to a display panel 31. Particularly, the touch screen 130 according to one embodiment is an in-cell touch screen in which the display panel 31 and the touch panel 32 are integrally formed. Hereinafter, the touch screen 130 may also be referred to as in-cell touch screen 130 where it is convenient to the description of certain embodiments.

The in-cell touch screen 130 may have a structure as shown in FIGS. 2A to 2D. Referring to FIG. 2A, the display panel 31 includes a thin film transistor glass (TFT glass) 131 and a color filter glass 133. Further, the touch panel 32 includes a first pattern 132 formed with a plurality of touch sensors and that recognizes an X-axis or Y-axis coordinate and a second pattern 134 formed with a plurality of touch sensors and that recognizes a Y-axis or X-axis coordinate. The first pattern 132 and the second pattern 134 may be referred to as a transmitting pattern and a receiving pattern.

In an in-cell touch screen 130 of FIG. 2A, at an upper surface of a TFT glass 131, a first pattern 132 is mounted, and at an upper surface of a color filter glass 133, a second pattern 134 is mounted. In an in-cell touch screen 130 of FIG. 2B, at a lower surface of a TFT glass 131, a first pattern 132 is mounted, and at an upper surface of a color filter glass 133, a second pattern 134 is mounted. In an in-cell touch screen 130 of FIG. 2C, at an upper surface of a TFT glass 131, a first pattern 132 is mounted, and at a lower surface of a color filter glass 133, a second pattern 134 is mounted. In an in-cell touch screen 130 of FIG. 2D, at a lower surface of a TFT glass 131, a first pattern 132 is mounted, and at a lower surface of a color filter glass 133, a second pattern 134 is mounted.

The touch panel 32 of the in-cell touch screen 130 operates for a time at which the display panel 31 does not operate. For example, the touch panel 32 operates at a display porch time in which a common power supply signal Vcom to drive the display panel 31 is not applied. This is to prevent the touch panel 32 from erroneously operating due to noise occurring in the common power supply signal Vcom. However, there is a problem where an erroneous operation occurs in a state where a touch panel of the in-cell touch screen is affected by noise due to a limitation of the driving time of the touch panel 32 of the in-cell touch screen 130.

The touch screen 130 according to the present disclosure may change a frame rate of the display panel 31 according to the controller 110 and display a screen according to the changed frame rate. For example, in a state in which noise is not introduced, the display panel 31 of the touch screen 130 may display a screen with a default frame rate (e.g., 60 frames per second (fps)), and in the state being affected by noise (e.g. outside noise exists), the display panel 31 of the touch screen 130 may display a screen with a frame rate that is less than the default frame rate (e.g., 50 fps). The reduction of the frame rate of the display panel 31 improves a touch performance by preventing the touch panel 32 of the touch screen 130 from an erroneously operation. The reduced frame rate of the display panel 31 is changed to the default frame rate when the noise is removed (e.g. when the touch panel 32 is not affected by noise). A description thereof will be proved later.

Although not shown in FIG. 1, the touch screen 130 may include a touch module (or a driver integrated circuit (IC)) that controls operation of the touch panel 32. Alternatively, the touch module may be included in the controller 110. Further, the touch screen 130 may include a Liquid Crystal Display (LCD) Driver Integrated chip (LDI) (not shown) that controls operation of the display panel 31. The touch screen 130 may control a frame rate of the display panel 31 through the LDI by the control of the controller 110.

The RF unit 150 supports a wireless communication function of the mobile terminal 100, and when the mobile terminal 100 supports a mobile communication function, the RF unit 150 may be formed as a mobile communication module. The RF unit 150 may include an RF transmitter for up-converting a frequency of a signal to be transmitted and amplifying the signal, and an RF receiver for down-converting a frequency of a received signal and low-noise amplifying the signal. Particularly, the RF unit 150 may be a cause of noise for the touch screen 130 when communicating or when transmitting and receiving data. That is, radiation noise of the RF unit 150 may be introduced into the touch screen 130 to cause an erroneous touch operation.

The interface unit 140 may connect an external device. Particularly, the interface unit 140 may be connected to a charger (not shown) to charge a battery (not shown). For this, the interface unit 140 may include a detection terminal to notify the controller 110 of a connection of the charger and power terminals (positive terminal (+) and negative terminal (-)) to supply power to charge the battery (not shown) to the charging unit 160.

The charging unit 160 charges a battery (not shown). When the charger (not shown) is connected to the interface unit 140, the charging unit 160 is activated to charge a battery (not shown) with a certain charge frequency (e.g., 40MHz). When the battery (not shown) is charged, the charging unit 160 creates charge noise. The charge noise is introduced into the touch screen 130 to cause an erroneous touch operation.

The storage unit 120 stores an Operating System (OS) of the mobile terminal 100, an application program for other option functions, such as a sound reproduction function, image or moving picture reproduction function, a broadcasting reproduction function, user data, and data transmitted and received upon communicating. In one embodiment, the storage unit 120 may store a frame rate control program that adjusts a frame rate of the touch screen 130 in a state being affected by noise. The frame rate control program may include a routine that determines whether the in-cell touch screen 130 is in the state being affected by noise according to various previously defined conditions, a routine that determines a noise level, and a routine that controls a change of a frame rate according to a noise level.

Further, the storage unit 120 may store a mapping table mapping a frame rate and at least one reference value to determine a noise level. For example, the storage unit 120 may store a mapping table such as Table 1.

**Table 1**

| Noise level | Frame rate |
|---|---|
| 0 (0< = N< 5, default level) | 60 fps (frame per second) |
| 1 (5< = N< 10) | 50 fps |
| 2 (10< = N< 15) | 45 fps |
| 3 (15 < = N) | 40 fps |

Referring to Table 1, a noise level 0 indicates a state in which noise does not exist or a state in which noise of less than a first reference value exists, and the display panel 31 operates with a default frame rate of 60 fps. The noise level 1 indicates a state in which noise of a first reference value or more and less than a second reference value exists, and the display panel 31 may operate with a frame rate of 50 fps reduced further than a default frame rate. The noise level 2 indicates a state in which noise of a second reference value or more and less than a third reference value exists, and the display panel 31 may operate with a frame rate of 45 fps. The noise level 3 indicates a state in which noise of a third reference value or more exists, and the display panel 31 may operate with a frame rate of 40 fps. Here, the character 'N' indicates the detected number of times of a signal (hereinafter, a noise signal) having a width of a reference time (10ms) or less for a certain time period (e.g., 200ms) and a magnitude of a reference value (e.g., 0.7V) or more.

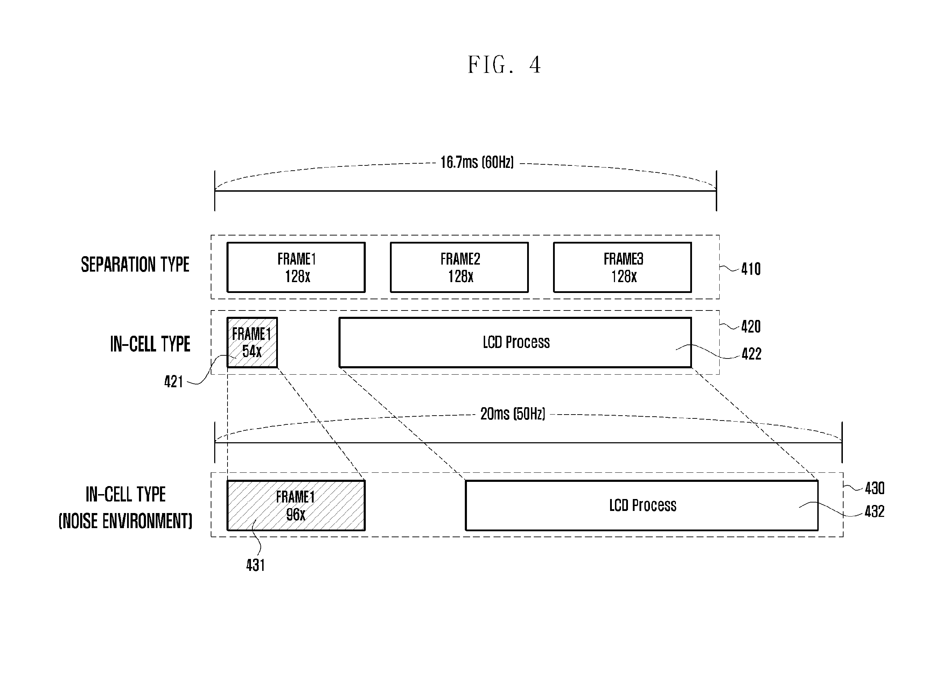

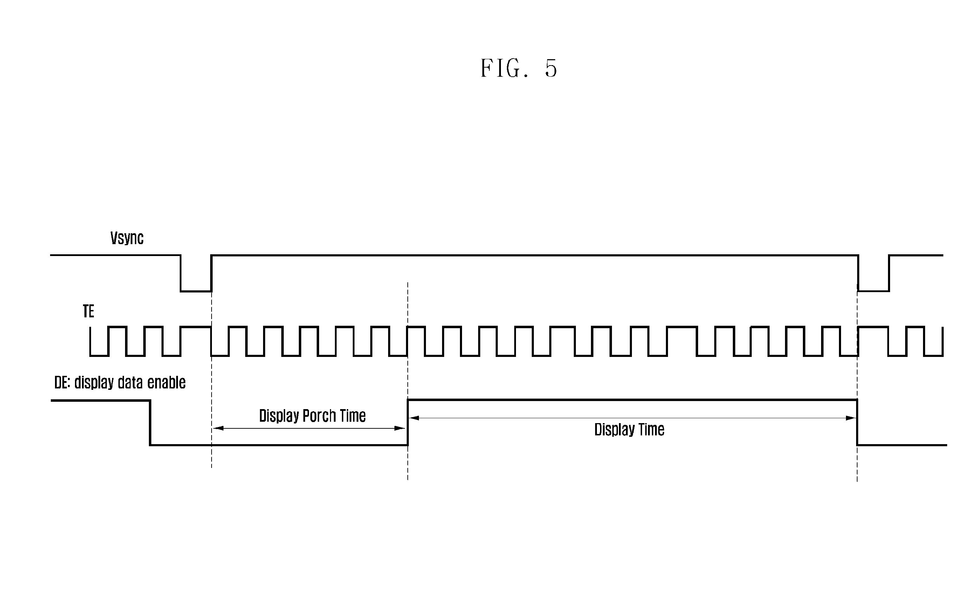

Referring to Table 1, as a noise level increases, a frame rate that drives the display panel 31 is reduced. This is to increase a time (porch time) in which a common power supply signal Vcom signal does not exist, as the display panel 31 increases a time that displays an image of 1 frame. That is, embodiments of the present disclosure are characterized by increasing a possible driving time of the touch panel 32 by reducing a frame rate in a state being affected by noise. Further description thereof is provided later with reference to FIGS. 4 and 5.

Table 1 is an example and does not limit the present disclosure. That is, a frame rate according to the number of the noise level and a noise level may be changed according to a designer's intention and may be optimized through experimentation.

Further, in the foregoing description, it has been described that a noise level is classified based on the detection number of times of a noise signal, however the present disclosure is not limited thereto. That is, the noise level may be determined in consideration of various situations in which noise may occur. For example, in consideration of a situation in which a charger is connected or a situation in which the RF unit 150 is activated for communication or data communication, a noise level may be classified. In another example, a default situation in which a charger is connected or a situation in which the RF unit 150 is activated may be mapped to a noise level 1, and a situation in which connection of a charger or in which activation of the RF unit 150 simultaneously occur may be mapped to a noise level 2.

The controller 110 may perform a data processing function of controlling general operations of the mobile terminal 100 and signal flow between internal constituent elements of the mobile terminal 100. The controller 110 may be a Central Processing Unit (CPU) and an application processor. Particularly, when the touch screen 130 is activated, the controller 110 determines whether the in-cell touch screen 130 is in a state being affected by noise and controls a frame rate of the display panel 31 according to a determined result. For example, if the in-cell touch screen 130 is not a state being affected by noise, the controller 110 may control the display panel 31 to operate with a default frame rate (e.g., 60 fps), and if the in-cell touch screen 130 is in a state being affected by noise, the controller 110 may control the display panel 31 to operate with a reduced frame rate (e.g., 50 fps) which is less than the default frame rate. Alternatively, when a state being affected by noise is classified into a plurality of levels, the controller 110 may control the display panel 31 to operate with a frame rate mapped to a noise level with reference to a mapping table like Table 1.

The controller 110 determines whether the in-cell touch screen 130 is in a state being affected by noise. For example, the controller 110 may determine whether a charger is connected to the interface unit 140, and if a charger is connected to the interface unit 140, the controller 110 may determine that the in-cell touch screen 130 is in a state being affected by noise. Even if a charger is connected to the interface unit 140, if the battery charging is complete and the charging unit 160 does not operate, the controller 110 may determine that the in-cell touch screen 130 is not in a state being affected by noise. Alternatively, when the RF unit 150 is activated due to a communication request or upload or download of data, the controller 110 may determine that the in-cell touch screen 130 is in a state being affected by noise. Alternatively, the controller 110 may receive information about a state being affected by noise from a touch module (not shown) that controls operation of the touch panel 32.

Although not shown in FIG. 1, the mobile terminal 100 may further selectively include constituent elements having an additional function such as a broadcasting reception module that receives broadcasting, digital sound source reproduction module such as an MP3 module, and motion sensor module that detects a motion of the mobile terminal 100. Such constituent elements are variously changed according to trends of digital convergence, and the mobile terminal 100 according to the present disclosure may further include constituent elements identical to or corresponding to the above-described constituent elements.

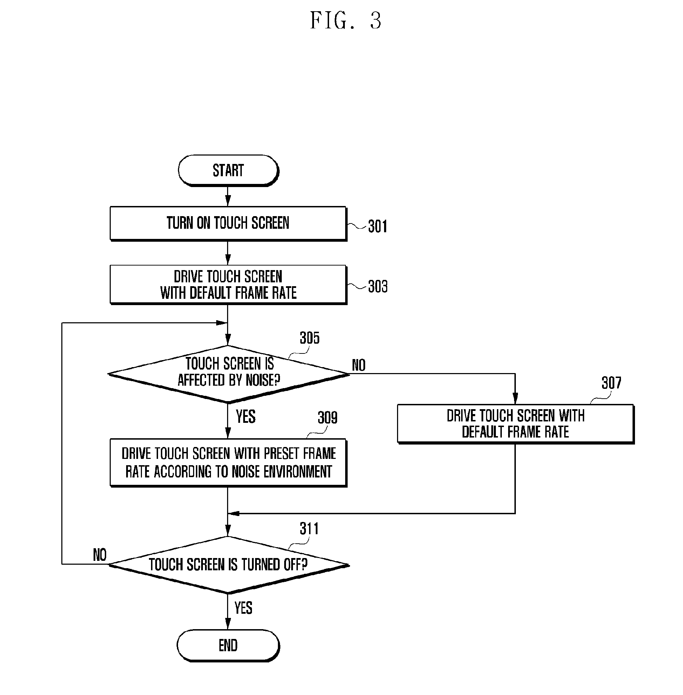

FIG. 3 is a flowchart illustrating a method of enhancing a touch performance of a touch screen 130 according to an embodiment of the present disclosure.

Referring to FIGS. 1 to 3, the controller 110 detects activation (ON) of the touch screen 130. When the touch screen 130 is activated at operation 301, the controller 110 drives the touch screen 130 with a default frame rate (e.g., 60 fps) at operation 303. Specifically, the display panel 31 of the touch screen 130 may display a screen with a default frame rate (e.g., 60 fps).

The controller 110 determines whether the touch screen 130 (e.g. touch panel 32 of the touch screen 130) is affected by noise at operation 305. The controller 110 may employ various methods to determine whether the touch screen 130 is affected by noise. For example, when a charger connection is recognized through an interruption terminal charge_det, the controller 110 may determine that the touch screen 130 is affected by noise. Alternatively, the controller 110 may determine whether the touch screen 130 is affected by noise according to a state of the charging unit 160. Specifically, when charge of a battery is being performed, the controller 110 may determine that the touch screen 130 is affected by noise, and even if a charger is in a connected state, when charging of a battery is complete, and the charging unit 160 does not operate, the controller 110 may determine that the touch screen 130 is not affected by noise. In another example, when a camera (not shown) operates or when the RF unit 150 operates like communication or an upload/download state of data, the controller 110 may determine that the touch screen 130 is affected by noise. In another example, the controller 110 may receive information about whether the touch screen 130 is affected by noise from a touch module (not shown) that controls operation of the touch panel 32. Specifically, the touch module (not shown) may analyze a signal that is input from a touch sensor and determine that the touch screen 130 is affected by noise when a signal having a width of a reference time (e.g., 10ms) for a predetermined time period (e.g., 200ms) and having a reference value (e.g., 0.7V) or more is detected by the predetermined number of times (e.g., 5 times) or more. Such a touch module may be included in the touch screen 130 or the controller 110. The state being affected by noise may be classified into a plurality of levels, as shown in Table 1.

If the touch screen 130 is not affected by noise at operation 305, the controller 110 drives the touch screen 130 with a default frame rate at operation 307. That is, the display panel 31 of the touch screen 130 displays a screen with a default frame rate.

If the touch screen 130 is affected by noise at operation 305, the controller 110 drives the touch screen 130 with a certain frame rate which is less than default frame rate at operation 309. That is, the controller 110 reduces a frame rate of the touch screen 130 by a certain magnitude. For example, the controller 110 may control the display panel 31 of the touch screen 130 to operate with a frame rate of 50 fps. When the state being affected by noise is classified into a plurality of levels, the controller 110 controls the display panel 31 of the touch screen 130 to operate with a frame rate mapped to a corresponding noise level with reference to Table 1.

The controller 110 determines whether the touch screen 130 is turned off (inactivated) at operation 311.

If the touch screen 130 is not turned off, the process returns to operation 305 and the above-described process is repeatedly performed. For example, the reduced frame rate of the display panel 31 is changed to the default frame rate when the touch panel 32 is not affected by noise. The reduced frame rate of the display panel 31 may be maintained when touch panel 32 is still affected by noise.

If the touch screen 130 is turned off, the controller 110 terminates a frame rate control of the touch screen 130.

FIGS. 4 and 5 are diagrams illustrating operation of a touch screen according to a frame rate change according to an embodiment of the present disclosure.

Referring to FIGS. 1 to 5, reference numeral 410 indicates a driving time of a touch panel of a separated touch screen in which a touch panel and a display panel are separated and formed. Because the touch panel of the separated touch screen is not affected by noise by a common power supply signal Vcom of the display panel, the touch panel of the separated touch screen is divided into three segments, but it may be seen that the touch panel continuously operates for a cycle (about 16.7 ms = 1/60) of 1 frame.

Reference numerals 420 and 430 indicate operation of the in-cell touch screen 130 in which the touch panel 32 and the display panel 31 are integrally formed. In this case, the reference numeral 420 indicates a case in which the in-cell touch screen 130 operates with a frame rate of 60 fps. In this case, reference numeral 421 indicates a segment in which the touch panel 32 operates, and reference numeral 422 indicates a segment in which the display panel 31 operates. That is, the segment 421 is included in a "display porch time" of FIG. 5, and the segment 422 is included in a "display time" of FIG. 5. Here, the "display porch time" of FIG. 5 is a segment in which a common power supply signal Vcom for operation of the display panel 31 is not input, and the "display time" of FIG. 5 is a segment in which the common power supply signal Vcom is input. That is, it can be seen that the touch panel 32 of the in-cell touch screen 130 is driven at a time at which the display panel 31 does not operate.

The reference numeral 430 indicates a case in which the in-cell touch screen 130 operates with a frame rate of 50 fps. As shown by reference numeral 420, reference numeral 431 indicates a segment in which the touch panel 32 operates, and reference numeral 432 indicates a segment in which the display panel 31 operates. In this case, a guard interval exists between a segment in which the touch panel 32 of the reference numerals 421 and 431 operates and a segment in which the display panel 31 of the reference numerals 422 and 432 operates.

Referring to the reference numeral 430, it can be seen that due to decrease of a frame rate, a time in which the touch panel 32 operates and a time in which the display panel 31 operates increase further than a time in which the touch panel 32 operates and a time in which the display panel 31 operates in a previous case (reference numeral 420). In this way, in the present disclosure, by reducing a frame rate when the touch screen 130 (e.g. touch panel 32) is affected by noise, a time in which the touch panel 32 operates can be secured. In other words, in the present disclosure, by securing a much more time in which the touch panel 32 operates, much more sample data for touch recognition can be obtained. For example, as shown in the reference numeral 420, when operating with 60 fps, the touch screen 130 may extract 54 sample data for a cycle of 1 frame. Alternatively, as shown in the reference numeral 430, when operating with 50 fps, the touch screen 130 may extract 96 sample data for a cycle of 1 frame. That is, as a frame rate reduces, the touch screen 130 can extract much more sample data. In this way, because the in-cell touch screen 130 according to the present disclosure can extract much more sample data when touch screen 130 is affected by noise, a touch performance is improved, compared with a conventional touch screen.

As described above, a method of enhancing a performance of a touch screen according to an embodiment of the present disclosure may be embodied in a program command form that may be performed through various computer means and be recorded in a computer readable recording medium. In this case, the computer readable recording medium may individually or in combination include a program command, data file, and data structure. A program command recorded in a recording medium may be specially designed and formed for the present disclosure or may be well known to a person of ordinary skill in the computer software art and be available by a person of ordinary skill in the computer software art. The computer readable recording medium may include magnetic media such as a hard-disk, floppy disk, and magnetic tape, optical media such as a CD-ROM and a DVD, magnetooptical media such as an optical disk, and a hardware device specially formed to store and perform a program command such as a ROM, RAM, and flash memory. Further, the program command includes a high-level language code that may be executed by a computer using an interpreter as well as a machine language code made by a compiler. The hardware device may be formed to operate as at least one software module so as to perform operation of the present disclosure.

As described above, in a method and apparatus for enhancing a performance of a touch screen according to an embodiment of the present disclosure, in a state being affected by noise in which outside noise has an influence on a touch panel, a touch performance can be improved. Further, by appropriately changing a frame rate according to a level of noise introduced into the touch screen, a stable display performance and a touch performance can be provided.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of enhancing a performance of a touch panel which is placed close to a display panel, the method comprising:
determining, while the touch panel is activated whether the touch panel is affected by noise; and
changing a frame rate of the display panel based on the determination.

2. The method of claim 1, wherein the changing the frame rate of the display panel comprises
reducing the frame rate of the display panel to less than a default frame rate of the display panel when the touch panel is affected by noise.

3. The method of claim 2, wherein the changing the frame rate of the display panel comprises
changing the reduced frame rate of the display panel to the default frame rate when the touch panel is not affected by noise.

4. The method of claim 1, wherein the determining of whether the touch panel is affected by noise comprises at least one of:
determining the touch panel to be affected by noise when a charging unit for charging a battery is activated;
determining the touch panel to be affected by noise when a Radio Frequency (RF) unit that transmits and receives a wireless signal is activated; and
determining the touch panel to be affected by noise when a noise signal is detected by a certain number of times or more for a certain time period, and
wherein the noise signal is a signal having a width of a certain reference time or less and a magnitude of a certain reference value or more.

5. The method of claim 1, wherein the determining of whether the touch panel is affected by noise comprises
determining a noise level according to a previously defined condition; and
reducing to a frame rate that is mapped to the determined noise level.

6. The method of claim 1, wherein the reducing of the frame rate comprises increasing an operating time of the touch panel by reducing the frame rate.

7. An apparatus of enhancing a performance of a touch panel, the apparatus comprising:
a display panel;
the touch panel is placed close to the display panel; and
a controller configured to determine whether the touch panel is affected by noise while the touch panel is activated, and to change a frame rate of the display panel based on the determination.

8. The apparatus of claim 7, the controller reduces the frame rate of the display panel to less than a default frame rate of the display panel when the touch panel is affected by noise.

9. The apparatus of claim 7, the controller changes the reduced frame rate of the display panel to the default frame rate when the touch panel is not affected by noise.

10. The apparatus of claim 7, further comprising a charging unit configured to charge a battery,
wherein the controller determines that the touch panel is affected by noise when the charging unit is activated.

11. The apparatus of claim 7, further comprising a radio frequency (RF) RF unit configured to transmit and receive a wireless signal,
wherein the controller determines that the touch panel is affected by noise when the RF unit is activated.

12. The apparatus of claim 7, wherein the touch panel determines that the touch panel is affected by noise when a noise signal having a width of a certain reference time or less and a magnitude of a certain reference value or more is detected by a certain number of times or more for a predetermined time period.

13. The apparatus of claim 7, wherein the controller determines a noise level according to a previously defined condition when the touch panel is affected by noise and controls the display panel to operate with a frame rate mapped to the determined noise level.

14. The apparatus of claim 13, further comprising a storage unit configured to store a reference condition that determines the noise level and a mapping table to which the noise level and the frame rate are mapped.

15. A non-transitory computer-readable medium for storing instructions that, when executed, cause at least one processor to perform the method of claim 1.
